# EUROPEAN PATENT APPLICATION

(11) **EP 4 534 371 A1**
(43) Date of publication of application: **09.04.2025**
(21) Application number: 23815863.8
(22) Date of filing: 22.05.2023
(51) Int. Cl.: B60W 30/02, B60T 7/12, B60W 10/04, B60W 10/184, B60W 10/20, B60W 30/06, B60W 50/10, B60W 60/00, B62D 6/00, B62D 13/06

(54) **REVERSE CONTROL DEVICE FOR COUPLED VEHICLE**

(30) Priority: 01.06.2022 JP 2022089912
(71) Applicant: JTEKT Corporation, Kariya-shi, Aichi 448-8652 (JP); J-Quad Dynamics Inc., Tokyo 103-0022 (JP)
(72) Inventor: TOKORO, Hirotaka, Tokyo 103-0022 (JP); NITTA, Nobuhiro, Tokyo 103-0022 (JP)
(74) Representative: Winter, Brandl - Partnerschaft mbB
(86) International application number: PCT/JP2023/018972
(87) International publication number: WO 2023/234104

(57) **Abstract**

(Problem) To provide a reverse control device that starts reversing a combination vehicle by autonomous driving only when conditions for appropriately performing the autonomous driving are satisfied, and that can stably reverse the combination vehicle by the autonomous driving. (Solution) An autonomous driving ECU 71 that functions as a reverse control device is installed in a towing vehicle 11 of a combination vehicle 1 in which a towed vehicle 12 is connected to the towing vehicle 11, and controls the towing vehicle 11 during autonomous reverse driving for reversing the combination vehicle 1 by autonomous driving. The autonomous driving ECU 71 starts the autonomous reverse driving when towing reverse start conditions are satisfied, the towing reverse start conditions including that the speed of the towing vehicle 11 is equal to or less than a predetermined value, and that steering torque of the towing vehicle 11 is equal to or less than a predetermined value.

## Description

### Technical Field

The present invention relates to reverse control devices for combination vehicles that are used in combination vehicles in which a towed vehicle is towed by a towing vehicle and that control the towed vehicle when the combination vehicle reverses.

### Background Art

A combination vehicle in which a towed vehicle is towed by a towing vehicle is relatively easy to maneuver when moving it forward because the towed vehicle follows the towing vehicle. However, especially in the case where a driver of a towing vehicle is not proficient in driving a combination vehicle, a combination vehicle is difficult to maneuver when reversing it, such as when parking it in a parking space, because a towed vehicle does not always move in a direction according to the steering angle of the towing vehicle. Therefore, devices and methods have been proposed that assist in maneuvering a combination vehicle when reversing it. For example, an autonomous or semi-autonomous driving system described in PTL 1 allows an operator inside a vehicle cabin to give operation commands to the system with his or her voice by saying commands such as "back up 10 feet," "stop," and "turn right 90 degrees."

### Citation List

### Patent Literature

PTL 1: US Patent No. 9688306

### Summary of Invention

### Technical Problem

A reverse control device that can automatically reverse a combination vehicle may not be able to appropriately guide the combination vehicle to a destination point by autonomous driving, depending on the state of a towing vehicle at the start of reversing the combination vehicle. Therefore, an object of the present invention is to provide a reverse control device that starts reversing a combination vehicle by autonomous driving only when conditions for appropriately performing the autonomous driving are satisfied, and that can stably reverse the combination vehicle by the autonomous driving.

### Solution to Problem

In order to achieve the above object, the present invention provides a reverse control device for a combination vehicle that is mounted on a towing vehicle of the combination vehicle in which a towed vehicle is connected to the towing vehicle including a steering device, and that controls the towing vehicle during autonomous reverse driving for reversing the combination vehicle by autonomous driving. The reverse control device starts the autonomous reverse driving when all of start conditions are satisfied, the start conditions including that a speed of the towing vehicle is equal to or less than a predetermined value and that steering torque of the towing vehicle is equal to or less than a predetermined value.

### Advantageous Effects of Invention

The reverse control device according to the present invention starts reversing a combination vehicle by autonomous driving only when conditions for appropriately performing the autonomous driving are satisfied, and can stably reverse the combination vehicle by the autonomous driving.

### Brief Description of Drawings

(FIG. 1) FIG. 1 is an overhead view showing a combination vehicle according to a first embodiment of the present invention.
(FIG. 2) FIG. 2 is a schematic configuration diagram showing a configuration example of a hitch angle sensor.
(FIG. 3) FIG. 3 is a schematic configuration diagram showing a configuration example of a towing vehicle.
(FIG. 4) FIG. 4 is a control block diagram showing the configuration of a control system composed of a plurality of ECUs.
(FIG. 5) FIG. 5 is a flowchart showing an example of a process that is performed by an autonomous driving ECU.

### Description of Embodiments

### (First embodiment)

A first embodiment of the present invention will be described with reference to the drawings. The embodiments described below are shown as specific examples suitable for carrying out the present invention, and part of the embodiments specifically illustrates various technical matters that are technically preferable. However, the technical scope of the present invention is not limited to these specific forms.

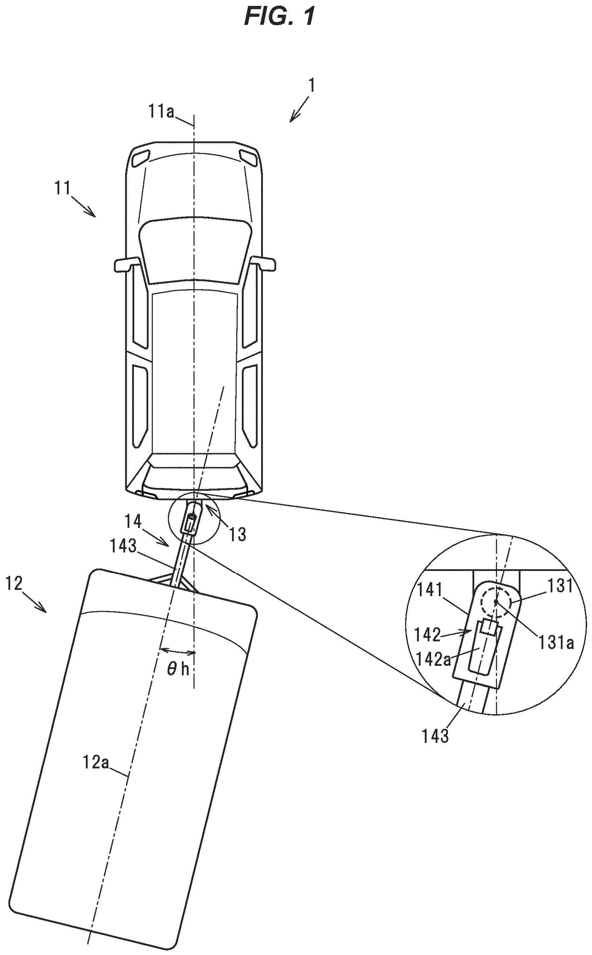

FIG. 1 is an overhead view showing a combination vehicle 1 according to the present embodiment. The combination vehicle 1 includes a towing vehicle 11 and a towed vehicle 12. When the combination vehicle 1 moves forward, the towed vehicle 12 is towed by the towing vehicle 11. The towing vehicle 11 and the towed vehicle 12 are connected by a towing-side connecting member 13 on the towing vehicle 11 side and a towed-side connecting member 14 on the towed vehicle 12 side. FIG. 1 shows a case where the towed vehicle 12 is a box-shaped camper as an example. However, the towed vehicle 12 is not limited to this, and may be, for example, a boat trailer loaded with a boat, or a cargo trailer.

The towing-side connecting member 13 is provided with a spherical hitch ball 131. The towed-side connecting member 14 includes: a coupler 141 that covers the hitch ball 131; a latch mechanism 142 that retains the coupler 141 on the hitch ball 131 by an operation of a lever 142a; a rod-shaped tongue 143 with the coupler 141 fixed to its distal end. The towed-side connecting member 14 is swingable about a hitch point 131a that is the center point of the hitch ball 131.

In FIG. 1, each of a center line 11a of the towing vehicle 11 in the front-rear direction of the towing vehicle 11 and a center line 12a of the towed vehicle 12 in the front-rear direction of the towed vehicle 12 is shown by a long dashed short dashed line. When the combination vehicle 1 is viewed from above, the center line 11a of the towing vehicle 11 and the center line 12a of the towed vehicle 12 in the front-rear direction of the towed vehicle 12 intersect at the hitch point 131a. The angle θh between the center line 11a of the towing vehicle 11 and the center line 12a of the towed vehicle 12 in the front-rear direction of the towed vehicle 12 is a hitch angle that indicates a tilt angle of the towed vehicle 12 with respect to the towing vehicle 11. The hitch angle is detected by a hitch angle sensor.

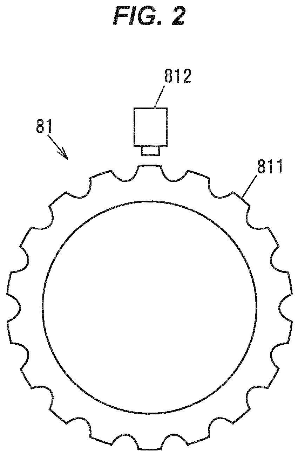

FIG. 2 is a schematic configuration diagram showing a configuration example of a hitch angle sensor 81. The hitch angle sensor 81 includes a gear-shaped magnetic element 811 fixed to the coupler 141, and a magnetic sensor 812 attached to the towing-side connecting member 13. The magnetic sensor 812 faces the outer periphery of the magnetic element 811. The strength of a magnetic field that is detected by the magnetic sensor 812 changes as the magnetic element 811 rotates with respect to the magnetic sensor 812. Therefore, the hitch angle can be detected based on the change in strength of the magnetic field.

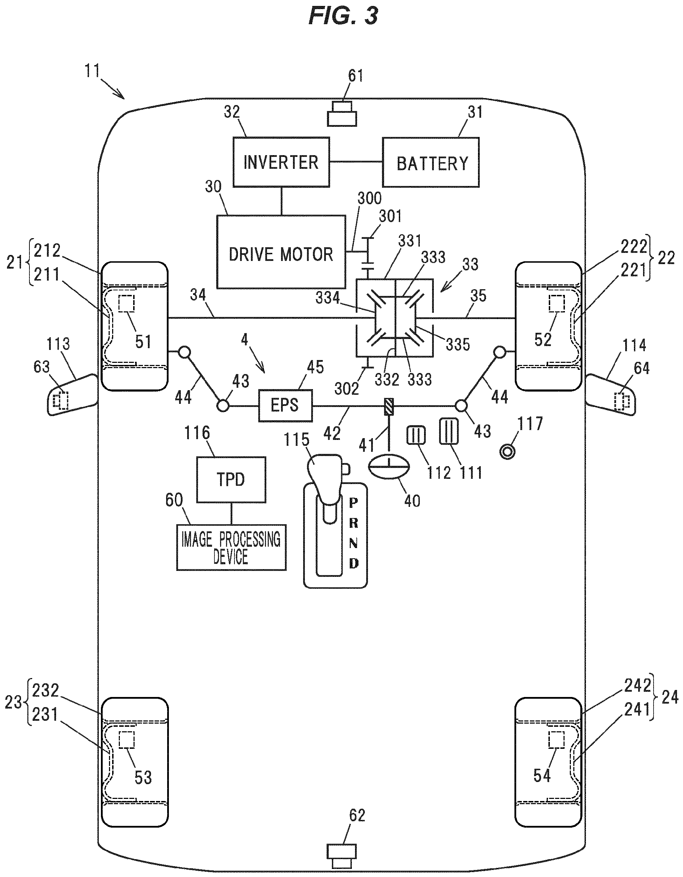

FIG. 3 is a schematic configuration diagram showing a configuration example of the towing vehicle 11. The towing vehicle 11 includes left and right front wheels 21, 22 that are steered wheels and left and right rear wheels 23, 24 that are non-steered wheels. The towing vehicle 11 has an autonomous driving function that enables autonomous driving for automatically steering the left and right front wheels 21, 22 at least when the combination vehicle 1 reverses. In the present embodiment, the towing vehicle 11 is a battery electric vehicle using, as its driving source, a drive motor 30 that is supplied with a current and generates a driving force. The towing vehicle 11 is equipped with a battery 31 and an inverter 32. A direct current output from the battery 31 is converted to an alternating current by the inverter 32 and supplied to the drive motor 30. When a driver drives the towing vehicle 11, the magnitude of the current that is supplied to the drive motor 30 changes according to the amount of depression of an accelerator pedal 111.

The drive motor 30 is an interior permanent magnet (IPM) synchronous motor including a stator that generates a rotating magnetic field by the alternating current supplied from the inverter 32, and a rotor that rotates with respect to the stator, with a plurality of permanent magnets embedded in the rotor. However, electric motors with other configurations may be used as the drive motor 30. The driving source of the towing vehicle 11 may be an engine that is an internal combustion engine, or may be a hybrid system that is a combination of an engine and an electric motor.

Torque output from the drive motor 30 is transferred from a pinion gear 301 fixed to an output rotary shaft 300 of the drive motor 30 to a ring gear 302, and is input to a differential unit 33. The differential unit 33 includes: a differential case 331 to which the ring gear 302 is fixed; a pinion gear shaft 332 fixed to the differential case 331; a plurality of pinion gears 333 supported by the pinion gear shaft 332; and a pair of side gears 334, 335 that mesh with the plurality of pinion gears 333 with their gear axes perpendicular to those of the plurality of pinion gears 333.

A left drive shaft 34 is connected to one side gear 334 of the differential unit 33, and a right drive shaft 35 is connected to the other side gear 335. Torque input to the differential unit 33 is distributed to the left front wheel 21 and the right front wheel 22 via the drive shafts 34, 35.

The left and right front wheels 21, 22 are steered by a steering device 4. The steering device 4 includes: a steering wheel 40 that is steered by the driver of the towing vehicle 11; a steering shaft 41 connected to the steering wheel 40; a rack shaft 42 that moves back and forth in the vehicle width direction as the steering shaft 41 rotates; tie rods 44 swingably connected to both ends of the rack shaft 42 via ball joints 43; and an electric power steering (EPS) system 45. During manual driving when the driver steers the steering wheel 40, the electric power steering system 45 functions as a steering assist device that generates a steering assist force to assist a steering operation of the steering wheel 40. During autonomous driving, the electric power steering system 45 functions as an actuator that moves the rack shaft 42 to steer the left and right front wheels 21, 22.

The front wheels 21, 22 and the rear wheels 23, 24 are composed of metal wheels 211, 221, 231, and 241 with rubber tires 212, 222, 232, and 242 mounted thereon, respectively. Brake devices 51 to 54 are provided corresponding to the front wheels 21, 22 and the rear wheels 23, 24, respectively. The brake devices 51 to 54 generate braking forces of a strength according to the amount of depression of a brake pedal 112.

The towing vehicle 11 is equipped with a plurality of cameras that captures an image of the surroundings of the combination vehicle 1. In the present embodiment, the plurality of cameras includes: a front camera 61 that captures an image of the area in front of the towing vehicle 11; a rear camera 62 that captures an image of the area behind the towing vehicle 11; a left side camera 63 that captures an image of the area to the left of the towing vehicle 11; and a right side camera 64 that captures an image of the area to the right of the towing vehicle 11. The front camera 61 is installed at the front end of the towing vehicle 11, and the rear camera 62 is installed at the rear end of the towing vehicle 11. The left side camera 63 and the right side camera 64 are installed on left and right side mirrors 113, 114, respectively.

Image information of images captured by the front camera 61, the rear camera 62, the left side camera 63, and the right side camera 64 are sent to an image processing device 60. The image processing device 60 analyzes the image information from each of these cameras 61 to 64 to grasp the situation around the combination vehicle 1 and perceives an obstacle, if any. The towed vehicle 12 may also be equipped with a camera, and the image processing device 60 may also use image information from this camera to perceive an obstacle around the combination vehicle 1.

The towing vehicle 11 is also provided with a shift lever 115. The driver can shift the shift lever 115 to a parking range in which the towing vehicle 11 is not allowed to move, a reverse range for reverse traveling, a neutral range, and a drive range for forward traveling.

A touch panel display (TPD) 116 is installed in the towing vehicle 11 at a position where the driver can operate it. The touch panel display 116 is used as a display for a car navigation system, and is also used to display images of the surroundings of the combination vehicle 1 created by the image processing device 60. For example, the image processing device 60 combines overhead images of the surroundings of the combination vehicle 1 from the image information obtained from each of the cameras 61 to 64, and displays the resultant image on the touch panel display 116.

The towing vehicle 11 is also provided with a start button 117 that is operated by the driver. The start button 117 is a button for starting reversing the combination vehicle 1 under autonomous driving. The start button 117 is, for example, a push button switch, but is not limited to this. The start button may be a virtual button displayed on the touch panel display 116.

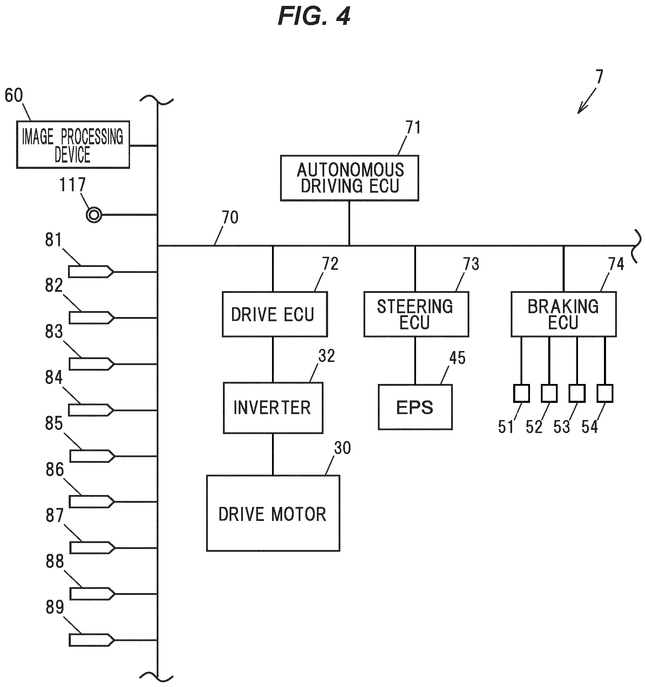

FIG. 4 is a control block diagram showing the configuration of a control system 7 composed of a plurality of ECUs (Electronic Control Units) and mounted on the towing vehicle 11. The control system 7 includes an autonomous driving ECU 71, a drive ECU 72, a steering ECU 73, and a braking ECU 74. The ECUs 71 to 74 are connected to an in-vehicle network 70 such as a CAN (Controller Area Network) or an LIN (Local Interconnect Network), and can communicate bidirectionally.

The ECUs 71 to 74 can acquire detection results from a plurality of sensors installed in various parts of the towing vehicle 11 via the in-vehicle network 70. The plurality of sensors includes: the hitch angle sensor 81 that detects the hitch angle between the towing vehicle 11 and the towed vehicle 12; wheel speed sensors 82 that detect the rotational speeds of the front wheels 21, 22 and the rear wheels 23, 24; a voltage sensor 83 that detects the voltage of the battery 31; a steering angle sensor 84 that detects the steering angle of the steering wheel 20; a steering torque sensor 85 that detects the steering torque applied to the steering wheel 20; an EPS temperature sensor 86 that detects the temperature of the electric power steering system 45, an accelerator pedal sensor 87 that detects the amount of depression of the accelerator pedal 111; a brake pedal sensor 88 that detects the amount of depression of the brake pedal 112; and a shift position sensor 89 that detects the position of the shift lever 115.

During manual driving when the driver maneuvers the towing vehicle 11, the drive ECU 72 outputs a PWM (Pulse Width Modulation) signal to the inverter 32 according to the detection results from the accelerator pedal sensor 87 and the shift position sensor 89 to control the drive motor 30. The steering ECU 73 controls the electric power steering system 45 according to the detection results from the steering angle sensor 84 and the steering torque sensor 85. The braking ECU 74 controls the brake devices 51 to 54 according to the detection results from the brake pedal sensor 88 and the wheel speed sensors 82.

The autonomous driving ECU 71 is an ECU that controls autonomous driving of the towing vehicle 11, and functions as a reverse control device when the combination vehicle 1 reverses. During autonomous driving, the autonomous driving ECU 71 can send commands to the drive ECU 72, the steering ECU 73, and the braking ECU 74 to perform various operations. Specifically, it is possible to send a driving force command signal to the drive ECU 72 and cause the drive motor 30 to generate a driving force according to the driving force command signal. The autonomous driving ECU 71 can send a steered angle command signal to the steering ECU 73 to steer the front wheels 21, 22 to an angle according to the steered angle command signal. The autonomous driving ECU 71 can send a braking force command signal to the braking ECU 74 to cause the brake devices 51 to 54 to generate a braking force according to the braking force command signal.

The autonomous driving ECU 71 can communicate with the image processing device 60, and can acquire information on whether there is any obstacle perceived by the image processing device 60, and information on the position and size of the obstacle, if any. The autonomous driving ECU 71 can also acquire information indicating the operating state of the start button 117.

When all of a plurality of towing reverse start conditions are satisfied, the autonomous driving ECU 71 starts towing reverse control for reversing the combination vehicle 1 by autonomous driving. Hereinafter, autonomous driving for reversing the towing vehicle 11 will be referred to as autonomous reverse driving. As used herein, autonomous driving means not only causing the towing vehicle 11 to travel with the driver of the towing vehicle 11 not operating any of the steering wheel 20, the accelerator pedal 111, and the brake pedal 112. Autonomous driving also includes so-called driver assistance in which the driver does not operate the steering wheel 20 but operates the accelerator pedal 111 and the brake pedal 112.

A person who performs an operation to start autonomous reverse driving of the combination vehicle 1 is not limited to the driver of the towing vehicle 11, and may be, for example, a passenger in the towing vehicle 11 or a person in the towed vehicle 12, or may be a person who is not in either the towing vehicle 11 or the towed vehicle 12. Hereinafter, the person who performs the operation to start autonomous reverse driving will be referred to as the operator.

The operator specifies either or both of the direction of travel and a target position during the autonomous reverse driving. The operator can specify either or both of the direction of travel and the target position by, for example, using the touch panel display 116. The operator may specify the direction of travel and the target position of the combination vehicle 1 by operating an operation device installed in the towing vehicle 11 or the towed vehicle 12 or by operating the operator's wireless information terminal.

The plurality of towing reverse start conditions includes the following first to twelfth conditions. The autonomous driving ECU 71 starts the towing reverse control when all of the first to twelfth conditions are met.

The first condition is that the speed of the towing vehicle 11 is equal to or less than a predetermined value. The autonomous driving ECU 71 can obtain the speed of the towing vehicle 11 based on, for example, the detection results from the wheel speed sensors 82. The predetermined value in the first condition is a value small enough that the first condition is satisfied only when the towing vehicle 11 is substantially at a stop. In other words, the first condition can also be said to be that the towing vehicle 11 is at a stop.

The second condition is that the accelerator pedal 111 is not being depressed. The autonomous driving ECU 71 can determine that the second condition is satisfied when the amount of depression of the accelerator pedal 111 is equal to or less than a predetermined value based on the detection results from the accelerator pedal sensor 87. The predetermined value in the second condition is a value less than the amount of depression set as the play of the accelerator pedal 111. As used herein, the play refers to a region in which the amount of depression of the accelerator pedal 111 is small, namely a region in which the operation of depressing the accelerator pedal 111 does not affect control of the drive motor 30.

The third condition is that the towing vehicle 11 is being braked. The autonomous driving ECU 71 can determine that the third condition is satisfied when the amount of depression of the brake pedal 112 is equal to or greater than a predetermined value based on, for example, the detection results from the brake pedal sensor 88. This determination need not necessarily be made based on a brake (foot brake) that is activated when the brake pedal 112 is depressed. For example, it can be determined that the third condition is satisfied when the towing vehicle 11 is being braked by, for example, a parking brake.

The fourth condition is that the steering torque is equal to or less than a predetermined value. The autonomous driving ECU 71 can determine whether the fourth condition is satisfied based on the detection results from the steering torque sensor 85. The predetermined value in the fourth condition is a value small enough that the fourth condition is satisfied only when the steering wheel 20 is not being steered. In other words, the fourth condition can be said to be that the steering wheel 20 is not being steered.

The fifth condition is that the shift position of the shift lever 115 is in the reverse range. The autonomous driving ECU 71 can determine whether the fifth condition is satisfied based on the detection results from the shift position sensor 89.

The sixth condition is that the drive ECU 72, the steering ECU 73, and the braking ECU 74 are operating normally. The autonomous driving ECU 71 can determine that the sixth condition is satisfied when communication with the drive ECU 72, the steering ECU 73, and the braking ECU 74 is normal, and when information obtained from the drive ECU 72, the steering ECU 73, and the braking ECU 74 does not include information indicating that an abnormality has occurred in any of the ECUs 72 to 74.

The seventh condition is that there is no abnormality in any of devices to be controlled by the drive ECU 72, the steering ECU 73, and the braking ECU 74. The devices to be controlled by the drive ECU 72 are the drive motor 30 and the inverter 32. The device to be controlled by the steering ECU 73 is the electric power steering system 45. The devices to be controlled by the braking ECU 74 are the brake devices 51 to 54. The autonomous driving ECU 71 can determine whether the seventh condition is satisfied based on information obtained by, for example, communication with the drive ECU 72, the steering ECU 73, and the braking ECU 74. For example, the seventh condition is not satisfied when the information obtained from the steering ECU 73 includes information indicating overheating of the electric power steering system 45.

The eighth condition is that the voltage of the battery 31 is within an appropriate range. The autonomous driving ECU 71 can determine whether the eighth condition is satisfied based on the detection results from the voltage sensor 83.

The ninth condition is that the above sensors 81 to 89 are operating normally. For example, the autonomous driving ECU 71 determines that the ninth condition is not satisfied when the detection results from any of the sensors 81 to 89 are not within a normal range. When the steering angle sensor 84 is not an absolute encoder that can detect an absolute position of the steering angle, but is, for example, an incremental encoder that outputs a pulse signal, the autonomous driving ECU 71 also determines that the ninth condition is not satisfied when offset adjustment of the neutral position of the steering wheel 20 is incomplete. The autonomous driving ECU 71 also determines that the ninth condition is not satisfied when offset adjustment of the hitch angle that is detected by the hitch angle sensor 81 is incomplete. The offset adjustment of the neutral position of the steering wheel 20 and the offset adjustment of the hitch angle can be made by, for example, setting the steering angle and the hitch angle when the combination vehicle 1 linearly travels a predetermined distance forward to zero.

The autonomous driving ECU 71 also determines that the ninth condition is not satisfied when it is determined that the hitch angle is not being correctly detected by the hitch angle sensor 81. In other words, the ninth condition includes the hitch angle between the towing vehicle 11 and the towed vehicle 12 being correctly detected by the hitch angle sensor 81. Whether the hitch angle is being correctly detected by the hitch angle sensor 81 can be determined based on, for example, images captured by the rear camera 62, the left side camera 63, and the right side camera 64, namely by comparing these images with the detection value of the hitch angle sensor 81. Specifically, for example, when the hitch angle detected by the hitch angle sensor 81 is 0°, but it is detected from the images from the rear camera 62, the left side camera 63, and the right side camera 64 that the towed vehicle 12 is tilted in the horizontal direction with respect to the towing vehicle 11, it is determined that the hitch angle is not being correctly detected by the hitch angle sensor 81.

The tenth condition is that no obstacle that would hinder reversing is found in images from the front camera 61, the rear camera 62, the left side camera 63, and the right side camera 64. The autonomous driving ECU 71 determines that the tenth condition is satisfied when it determines based on the information obtained from the image processing device 60 that no obstacle that would hinder reversing is present around the towing vehicle 11 or the towed vehicle 12 in the direction of travel specified by the operator, or around the towing vehicle 11 or the towed vehicle 12 on a path to a target position specified by the operator. The autonomous driving ECU 71 determines that the tenth condition is not satisfied when it determines that such an obstacle is present.

The eleventh condition is that the operator has performed an instruction operation to instruct to start autonomous driving while all of the first to tenth conditions are satisfied. This instruction operation can be performed by, for example, operating the start button 117 for the autonomous reverse driving as described above. However, an instruction operation to cause the autonomous driving ECU 71 to start the towing reverse control may be performed by operating the operation device installed in the towing vehicle 11 or the towed vehicle 12 or by operating the operator's wireless information terminal.

The twelfth condition is that the towed vehicle 12 is connected to the towing vehicle 11. The autonomous driving ECU 71 can make this determination based on, for example, whether information on the hitch angle has been acquired from the hitch angle sensor 81. The autonomous driving ECU 71 may determine whether the towed vehicle 12 is connected to the towing vehicle 11 particularly from information obtained from the image processing device 60 based on images from the rear camera 62.

When the first to eleventh conditions are satisfied but the twelfth condition is not satisfied, the autonomous driving ECU 71 starts non-towing reverse control to reverse, by autonomous driving, the towing vehicle 11 to which the towed vehicle 12 is not connected. In other words, when the towed vehicle 12 is not connected to the towing vehicle 11 at the time the instruction operation of the eleventh condition is performed, the autonomous driving ECU 71 reverses only the towing vehicle 11 by the non-towing reverse control.

The autonomous driving ECU 71 starts the towing reverse control when all of the first to twelfth conditions are satisfied. During the towing reverse control, the autonomous driving ECU 71 calculates a target value of the hitch angle for moving the combination vehicle 1 in the direction of travel or to the target position specified by the operator, sends a command to the steering ECU 73 so that the actual hitch angle matches this target value, and causes the steering device 4 to steer the left and right front wheels 21, 22. However, when the first to twelfth conditions are satisfied, the towing vehicle 11 is being braked due to the third condition. Therefore, the combination vehicle 1 starts to reverse after the towing vehicle 11 is released from the braked state. The speed of the towing vehicle 11 during reversing may be controlled by the autonomous driving ECU 71, or may be adjusted by the driver operating the accelerator pedal 111 or the brake pedal 112.

When any of the fourth to tenth conditions becomes unsatisfied after the towing reverse control is started, the autonomous driving ECU 71 stops the towing reverse control to bring the combination vehicle 1 to a stop. The autonomous driving ECU 71 also stops the towing reverse control when any of the following first to third stop conditions is satisfied.

The first stop condition is that the brake pedal 112 is depressed with a force large enough to stop the towing vehicle 11. Specifically, for example, the towing reverse control is stopped when the amount of depression of the brake pedal 112 becomes larger than the predetermined value of the third condition. Accordingly, for example, if the driver of the towing vehicle 11 feels some kind of danger from the surrounding conditions, he or she can immediately stop the towing vehicle 11 by depressing the brake pedal 112 hard. However, when the towing vehicle 11 is located near the target position, the driver may depress the brake pedal 112 to adjust the speed. Therefore, the predetermined value of the amount of depression of the brake pedal 112 for stopping the towing reverse control is set to be greater than the predetermined value of the third condition.

In other words, the autonomous driving ECU 71 can adjust the traveling speed according to the amount of depression of the brake pedal 112 during the autonomous reverse driving for moving the combination vehicle 1 toward the target position, and has a function to stop the autonomous reverse driving when the amount of depression of the brake pedal 112 becomes equal to or greater than the predetermined value. When the combination vehicle 1 has reached near the target position, the autonomous driving ECU 71 sets the predetermined value of the amount of depression of the brake pedal 112 to a value greater than before the combination vehicle 1 reached near the target position.

The second stop condition is that the operator has instructed to stop autonomous driving, or that the target position specified by the operator has been reached. The operator can instruct to stop autonomous driving by, for example, operating the start button 117 again. The operator may instruct to stop autonomous driving by operating the operation device installed in the towing vehicle 11 or the towed vehicle 12 or by operating the operator's wireless information terminal.

The third stop condition is that the hitch angle between the towing vehicle 11 and the towed vehicle 12 has become equal to or greater than a predetermined value due to, for example, the towing vehicle 11 or the towed vehicle 12 slipping because of a cross wind, a slope of a road surface, etc. The predetermined value of the hitch angle is an angle large enough for a jackknife phenomenon to occur. The jackknife phenomenon refers to a phenomenon in which, even when the towing vehicle 11 reverses, the hitch angle only increases and the towed vehicle 12 does not reverse. In such a case, the driver manually moves the towing vehicle 11 forward to reduce the hitch angle, and then the operator starts the towing reverse control by the autonomous driving ECU 71 again.

After starting the non-towing reverse control of the towing vehicle 11 to which the towed vehicle 12 is not connected, the autonomous driving ECU 71 stops the non-towing reverse control when any of the fourth to tenth conditions becomes unsatisfied or the first stop condition or the second stop condition is satisfied.

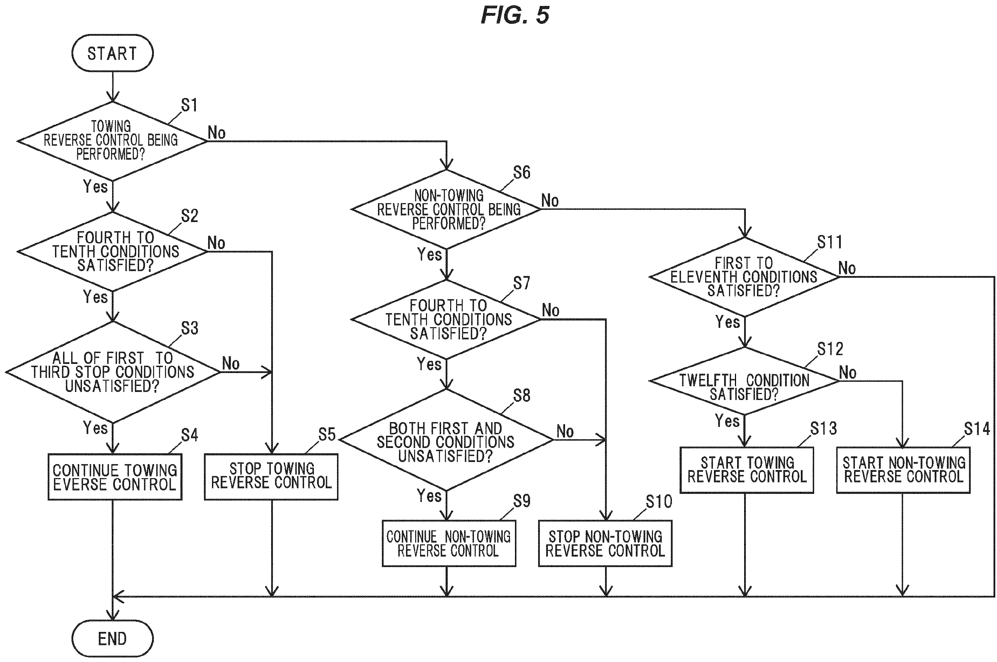

FIG. 5 is a flowchart showing an example of a process that is performed by the autonomous driving ECU 71. The autonomous driving ECU 71 repeatedly performs the process of this flowchart at predetermined control cycles.

The autonomous driving ECU 71 determines whether the towing reverse control is being performed (step S1). When the towing reverse control is being performed, the autonomous driving ECU 71 determines whether the fourth to tenth conditions are satisfied (step S2). When the result of the determination in step S2 is Yes, the autonomous driving ECU 71 determines whether all of the first to third stop conditions are unsatisfied (step S3). When the result of this determination is Yes, the autonomous driving ECU 71 continues the towing reverse control (step S4). On the other hand, when the result of the determination in step S2 or step S3 is No, the autonomous driving ECU 71 stops the towing reverse control (step S5).

When the result of the determination in step S1 is No, the autonomous driving ECU 71 determines whether the non-towing reverse control is being performed (step S6). When the non-towing reverse control is being performed, the autonomous driving ECU 71 determines whether the fourth to tenth conditions are satisfied (step S7). When the result of the determination in step S7 is Yes, the autonomous driving ECU 71 determines whether both the first stop condition and the second stop condition are unsatisfied (step S8). When the result of this determination is Yes, the autonomous driving ECU 71 continues the non-towing reverse control (step S9). On the other hand, when the result of the determination in step S7 or step S8 is No, the autonomous driving ECU 71 stops the non-towing reverse control (step S10).

When the result of the determination in step S6 is No, the autonomous driving ECU 71 determines whether the first to eleventh conditions are satisfied (step S11). When the result of this determination is Yes, the autonomous driving ECU 71 determines whether the twelfth condition is satisfied (step S12). When the result of the determination in step S12 is Yes, the autonomous driving ECU 71 starts the towing reverse control (step S13). When the result of the determination in step S12 is No, the autonomous driving ECU 71 starts the non-towing reverse control (step S14). On the other hand, when the result of the determination in step S11 is No, the process of the flowchart shown in FIG. 5 ends.

According to the first embodiment described above, autonomous reverse driving of the combination vehicle 1 can be stably performed by starting reversing the combination vehicle 1 by autonomous driving only when all of the first to twelfth conditions are satisfied.

### (Second embodiment)

Next, a second embodiment of the present invention will be described. The first embodiment described above illustrates a case where the operator performs an instruction operation to instruct to start the autonomous reverse driving by operating the start button 117, by operating the operation device installed in the towing vehicle 11 or the towed vehicle 12, or by operating the operator's wireless information terminal. In the present embodiment, the autonomous driving ECU 71 starts the autonomous reverse driving in response to an instruction operation that the driver of the towing vehicle 11 performs by operating the accelerator pedal 111. More specifically, when the amount of depression of the accelerator pedal 111 is equal to or greater than a predetermined value based on the detection results from the accelerator pedal sensor 87, the autonomous driving ECU 71 starts the autonomous reverse driving.

In the first embodiment described above, the conditions for starting the towing reverse control or the non-towing reverse control include that the accelerator pedal 111 is not being depressed (second condition). However, this condition is excluded in the present embodiment. In the present embodiment, in order to clearly distinguish from maneuvering during manual driving (non-autonomous driving) by the driver, essential conditions for starting the towing reverse control or the non-towing reverse control include that the towing vehicle 11 is in an autonomous driving mode. In other words, in the present embodiment, the eleventh condition described above is that the accelerator pedal 111 of the towing vehicle 11 is operated while all of the first condition and the third to tenth conditions are satisfied and the towing vehicle 11 is in the autonomous driving mode.

Determination as to whether the towing vehicle 11 is in the autonomous driving mode can be made based on, for example, the setting state of a switch for switching between a manual driving mode and the autonomous driving mode. It may be determined that the towing vehicle 11 is in the autonomous driving mode based on whether a target position or a direction of travel has been set by the operator.

According to the second embodiment, there is no need to operate the start button 117 when starting reversing by autonomous driving. Therefore, in addition to the effects of the first embodiment described above, the operational burden on the driver can be reduced when, for example, adjusting the vehicle speed during reversing by the amount of depression of the accelerator pedal 111 by the driver.

### (Additional Notes)

Although the present invention has been described above based on the first and second embodiments, these embodiments are not intended to limit the invention according to the claims. It should be noted that not all of the combinations of the features described in the embodiments are essential as means for solving the problem of the invention. The present invention may be modified as appropriate by omitting part of the configurations or adding or replacing configurations without departing from the spirit and scope of the present invention.

### Reference Signs List

1 COMBINATION VEHICLE
4 STEERING DEVICE
11 TOWING VEHICLE
12 TOWED VEHICLE
45 ELECTRIC POWER STEERING SYSTEM
61 FRONT CAMERA
62 REAR CAMERA
63 LEFT SIDE CAMERA
64 RIGHT SIDE CAMERA
71 AUTONOMOUS DRIVING ECU (REVERSE CONTROL DEVICE)
81 HITCH ANGLE SENSOR
111 ACCELERATOR PEDAL
112 BRAKE PEDAL

## Claims

1. A reverse control device for a combination vehicle that is mounted on a towing vehicle of the combination vehicle in which a towed vehicle is connected to the towing vehicle including a steering device, and that controls the towing vehicle during autonomous reverse driving for reversing the combination vehicle by autonomous driving, wherein the reverse control device starts the autonomous reverse driving when all of start conditions are satisfied, the start conditions including that a speed of the towing vehicle is equal to or less than a predetermined value and that steering torque of the towing vehicle is equal to or less than a predetermined value.

2. The reverse control device for the combination vehicle according to claim 1, wherein the start conditions include that an operator has performed an instruction operation to instruct to start the autonomous reverse driving while the speed of the towing vehicle is equal to or less than the predetermined value and the steering torque of the towing vehicle is equal to or less than the predetermined value.

3. The reverse control device for the combination vehicle according to claim 2, wherein the instruction operation is operating a start button for the autonomous reverse driving.

4. The reverse control device for the combination vehicle according to claim 2, wherein the instruction operation is operating an accelerator pedal of the towing vehicle.

5. The reverse control device for the combination vehicle according to claim 2, wherein in a case where the towed vehicle is not connected to the towing vehicle when the instruction operation is performed, the reverse control device reverses only the towing vehicle by the autonomous driving.

6. The reverse control device for the combination vehicle according to claim 1, wherein the start conditions include that no obstacle that hinders reversing of the combination vehicle is found in an image from a camera that captures surroundings of the combination vehicle.

7. The reverse control device for the combination vehicle according to claim 1, wherein the start conditions include that a hitch angle between the towing vehicle and the towed vehicle is being correctly detected by a hitch angle sensor.

8. The reverse control device for the combination vehicle according to claim 7, wherein the reverse control device determines whether the hitch angle is being correctly detected by the hitch angle sensor, based on an image from a camera that captures surroundings of the combination vehicle.

9. The reverse control device for the combination vehicle according to claim 1, wherein the reverse control device stops the autonomous reverse driving when a hitch angle between the towing vehicle and the towed vehicle becomes equal to or greater than a predetermined value.

10. The reverse control device for the combination vehicle according to claim 1, wherein the reverse control device is able to adjust a traveling speed according to an amount of depression of a brake pedal during the autonomous reverse driving for moving the combination vehicle toward a target position, and has a function to stop the autonomous reverse driving when the amount of depression of the brake pedal becomes equal to or greater than a predetermined value.

11. The reverse control device for the combination vehicle according to claim 10, wherein when the combination vehicle has reached near the target position, the reverse control device sets the predetermined value of the amount of depression to a value greater than before the combination vehicle reached near the target position.
